# EUROPEAN PATENT SPECIFICATION

(11) **EP 0 575 408 B1**
(45) Date of publication and mention of the grant of the patent: **15.10.1997**
(21) Application number: 92906352.7
(22) Date of filing: 11.03.1992
(51) Int. Cl.: G01N 21/77, C03C 17/25

(54) **A WAVEGUIDE SENSOR**
Wellenleitersensor
CAPTEUR A GUIDE D'ONDES

(30) Priority: 11.03.1991 IE 63691
(43) Date of publication of application: 29.12.1993
(73) Proprietor: McGILP, John, Glenageary, County Dublin (IE); O'KELLY, Brendan, Blackrock, County Dublin (IE); MACCRAITH, Brian, Portmarnock, County Dublin (IE); RUDDY, Vincent, Clontarf, Dublin 3 (IE)
(72) Inventor: McGILP, John, Glenageary, County Dublin (IE); O'KELLY, Brendan, Blackrock, County Dublin (IE); MACCRAITH, Brian, Portmarnock, County Dublin (IE); RUDDY, Vincent, Clontarf, Dublin 3 (IE)
(74) Representative: Weldon, Michael James
(86) International application number: GB9200428
(87) International publication number: WO9215862

(56) References cited:
- EP-A- 0 072 627
- US-A- 4 834 497
- PROCEEDINGS IN PHYSICS, vol. 44: OPTICAL FIBRE SENSORS 1989, SPRINGER, pp 436-442, G.E. BANDINI et al: 'Development of a pH-sensitive substrate for optical sensor applications'
- CERAMIC ENGINEERING AND SCIENCE PROCEEDINGS, vol. 5, no. 5/6, May 1984, US, pp 379-384; L.C. KLEIN: 'Oxide coatings from the sol-gel process'
- PATENT ABSTRACTS OF JAPAN vol. 10, no. 239 (C-367) 19 August 1986 & JP-A-61 072 639
- AMERICAN CERAMIC SOCIETY BULLETIN, vol. 69, no. 7, July 1990, COLUMBUS, US, pp 1141-1143; H.G. FLOCH: 'Colloidal sol-gel optical coatings'
- SENSOR AND ACTUATORS, vol. A26, no. 1/3, March 1991, LAUSANNE, CH, pp 483-487; K.T.V. GRATTAN ET AL: 'Use of sol-gel techniques for fibre optic sensor applications'

## Description

The invention relates to waveguide sensors and in particular to waveguide sensors for chemical detection in analytes. The invention also relates to a method for producing such waveguide sensors.

More especially, the invention relates to a waveguide sensor for chemical detection of the type including a light transmitting substrate and a coating on the substrate. In this specification, the term "light" is intended to cover radiation from any part of the electromagnetic spectrum including the non-visible part. The radiation chosen depends on the nature of the sensor.

Waveguide sensors of this type are known. For example, EP-A-0292207 describes such a sensor in which a silica optical fibre is coated with elastomeric or resin material. However, the optical performance of such a sensor is not entirely satisfactory because the coating has little mechanical resistance to abrasion and is not stable at relatively high temperatures. Another problem is that use of such sensors is restricted to non-polar solvents. In addition, a chemically sensitive composition such as a dye in the coating may be eluted over time.

EP-A-0247261 describes an optical sensor in which organic dye molecules are covalently bonded to a silane coupling agent which in turn is attached to the distal end of a fibre. This technique is limited by the nature of the dyes and coupling agents used and also by the optical applications for it.

A generally similar approach is taught in the paper Proceedings in Physics. Vol. 44 : Optical Fibre Sensors 1989. Springer, Pages 436-442, G.E. Badini et al. This paper also mentions incorporation of a dye at the sol stage in a sol gel process, in which the dye appears to be adsorbed.

This invention is directed towards providing an improved waveguide sensor which is physically and chemically stable, and has a wide range of applicaticns for chemical detection in a wide range of environments.

The invention is characterised in that the coating comprises a porous material derived from an organo-metallic species which is compatible with and is bonded to the substrate and which forms a cage-like porous molecular structure in which molecules of environmentally-sensitive dye are physically entrapped, the optical response providing an optical sensor of the local chemical environment. It has been found that such a molecular structure provides good mechanical and thermal stability properties.

Entrapment of dye molecules has been found to be suitable for many sensors. Because they are entrapped in a cage-like molecular structure, elution does not occur to any appreciable extent.

The coating may be of a glass material, and preferably of an inorganic glass material and most preferably of silica glass material. Such materials have been found to have particularly good optical qualities.

The substrate may be of a silica glass material. Such substrates are in common use and are readily available.

In one embodiment, the coating is provided along at least part of the length of the waveguide to utilise the evanescent field of light transmitted in the waveguide. Because of the problems of photo-bleaching of dyes, use of the evanescent field is preferred in many situations. Alternatively, or in addition, the coating may be provided at the tip of the waveguide.

The waveguide may be a fibre or a planar element.

The dye may be of the absorptive or fluorescent type. If a fluorescent dye, it may be a fluorescein dye, and more particularly a sodium salt of fluorescein. Such dyes have been found to be particularly suitable for many sensing environments.

In another embodiment, the sensor further comprises a light source for generation of light in the range of 400nm to 500nm wavelength. In this embodiment, the source may be of an Argon-ion laser. Such a wavelength range and source is suitable for use with a fluorescein dye.

According to another aspect, the invention provides a method for producing a waveguide sensor, characterised in that the method comprises the steps of:-
mixing precursor materials including an organo-metallic material and a dye to form a precursor solution;
curing the precursor solution;
at least partially coating a waveguide substrate with the cured precursor solution; and
curing the at least partially coated waveguide substrate to form a hard porous coating.

Such a method is extremely simple to carry out, particularly because it involves relatively low temperatures. Another advantage is that by control of the mixing composition, the refractive index of the resulting coating may be closely controlled.

Preferably, the method includes the step of pretreating the waveguide substrate prior to coating.

In one embodiment, the substrate is of an inorganic glass material. This leads to an effective chemical bond between the substrate and coating.

In one embodiment, the precursor materials include water and the molar ratio of water to organometallic species is less than 3:1. The ratio is preferably in the range 1:1 to 2.5:1 and most preferably approximately 2:1.

In another embodiment, the substrate is of silica glass and the organometallic species comprises an organo-silicon species and preferably the organo-silicon species comprises tetraethylorthosilicate.

The pH of the solution is very important in governing optical quality of the coating and should be less than 3.0, preferably between 0.5 and 2.0, and most preferably approximately 1.0.

In one embodiment, the precursor solution is cured for between 12 and 24 hours at a temperature of between 65 and 85°C, and preferably for approximately 18 hours at approximately 73°C.

The waveguide substrate is preferably an oxide glass and is pretreated by etching off any covering present on the substrate and by hydroxylating the surface of the substrate. In this embodiment, the surface of the substrate is preferably hydroxylated by immersing the substrate in water at between 70°C and 100°C for up to 24 hours. These steps greatly assist bonding of the coating.

In one embodiment, the substrate is a fibre which is coated by dipping the fibre into the cured precursor solution and withdrawing the fibre from the precursor solution at a desired rate to form a desired thickness of coating on the fibre.

Preferably, the method includes the step, after dipping, of cleaning the distal end of the fibre.

In a still further embodiment, the precursor materials include a dye, in one embodiment, a fluorescent dye in which case it may be a fluorescein and more particularly a sodium salt of fluorescein.

The invention will be more clearly understood from the following description thereof given by way of example only with reference to the accompanying drawings in which:-
Fig. 1 is a block diagram illustrating one optical arrangement incorporating a waveguide sensor according to the invention, and
Fig. 2 is a plot of fluorescence intensity against pH measured using the apparatus of Fig. 1.

A waveguide sensor for detecting chemical species in accordance with the invention comprises a light transmitting substrate such as a silica based fibre or planar substrate and a coating on the substrate. In one particular example which will be described in more detail below, the coating is of silicon-type material which is applied to form a porous material which is compatible with and is bonded to the substrate to form a cage-like porous molecular structure which contains a dye such as an absorptive or fluorescent dye. The fluorescent dye may be a fluorescein dye.

The waveguide sensor is produced by a method which comprises the steps of mixing precursor materials to form a precursor solution which is then cured and applied to a pretreated waveguide substrate. The coated waveguide substrate is then cured to form a hard porous coating.

In one case, the substrate is of an inorganic glass material such as silica glass and the precursor materials include an organo-metallic species which is compatible with the substrate to be coated. In the case of silica glass, the organometallic species may comprise tetraethylorthosilicate. The precursor material also includes water and the molar ratio of the water to the organo-metallic species is closely controlled and is generally less than 3:1 preferably between 1:1 and 2.5:1 and most preferably approximately 2:1 to provide a coating of desired porosity and viscosity which is both chemically and physically stable. The pH of the precursor solution is also controlled to ensure that an homogeneous and uniform coating of desired porosity is achieved. The pH should be less than 3.0 and preferably between 0.5 and 2.0. A pH of 1.0 has been found to provide particularly good results. It has been found that the transition from a uniform coating of a desired porosity to a non-homogeneous and hence optically unsatisfactory coating is determined by the organometallic to water ratio and/or the pH.

After mixing the precursor materials, the precursor solution is cured to a desired consistency and viscosity typically at from 65°C to 75°C for from 12 to 24 hours. 18 hours at 73°C has been found to be particularly suitable. After this period, the curing is stopped by removing the heat source.

The coating may be applied to any desired substrate which is a fibre or planar substrate. In the case of a fibre substrate, it is essential that the surface of the fibre is cleaned thoroughly. For fibres which are coated with a polymeric material, the polymeric material is first etched off to leave the silica core as the bonding surface. The silica core is then pretreated by immersion in hot deionised water with a temperature from 70 to 100°C for approximately 24 hours. This hydroxylates the surface of the silica substrate and we have found that this ensures that a chemical bond is formed between the coating and the substrate giving improved thermal performance, mechanical strength, and optical performance.

The precursor solution is a rheopectic fluid and may be coated onto the pretreated substrate by suitable techniques. In the case of fibre, the fibre is immersed in the fluid and the rate of withdrawal of the fibre from the fluid controls the thickness of the coating. The slower the rate of withdrawal, the thinner the coating. If thicker coatings are required, we have found that it is best achieved by building up multiple layers of thin coatings on the substrate to ensure that the mechanical strength and optical properties are not adversely affected.

After coating, the substrate is cured in air for about 24 hours at approximately 73°C (and in any event for between 18 and 30 hours at between 65°C and 75°C) to release the solvents in the matrix formed by the coating material on the substrate.

### EXAMPLE

A precursor solution for coating is prepared by mixing tetraethylorthosilicate, water, ethanol and the sodium salt of fluorescein in a weight ratio of 6.3:1.1:2.6:0.003 respectively. The pH of the solution is adjusted to 1.0 by the addition of hydrochloric acid.

This corresponds to a molar ratio of water to tetraethylorthosilicate of approximately 2:1.

The precursor solution thus formed is then cured at about 73°C for approximately 18.5 hours.

Commercially available polymer clad silica optical fibre, from which the primary coating is removed mechanically and the cladding was removed by chemical etching, is used as the waveguiding substrate in this case.

The fibre is conditioned by immersing it in deionised water at 73°C for 24 hours.

A glass tube is filled with the coating solution to a depth of 28mm and the conditioned fibre is removed from the deionised water, gently surface dried and dipped into the coating solution in the glass tube.

The coating solution is rheopectic, and by causing the fibre to emerge from the coating solution at a slow rate of approximately 50mm per minute, a thin coating is obtained.

In this case the distal end of the fibre is immediately cleansed of coating solution, leaving a coating of 28mm length along the length of the fibre.

The partially coated fibre is cured in air for about 20 hours at 73°C resulting in a hard porous coating of negligible solubility in dilute aqueous solutions.

The cured fibre has a porous substantially silica based glass coating which has a thickness of approximately 0.3µm which is intrinsically bound to the fibre. This was determined by Scanning Electron Microscopy.

It will be appreciated that because of its low density such a porous silica coating will have a refractive index lower than that of the silica fibre, allowing efficient waveguiding.

It will also be appreciated that such low temperature processing at 73°C allows environmentally-sensitive dyes of low thermal stability to be used in the invention.

It will also be appreciated that a coating of this thickness will result in a substantial sensor signal with a fast time response because, firstly, the thickness is similar to the evanescent field characteristic decay length allowing good optical coupling and, secondly, the coating is sufficiently thin to allow rapid diffusion of analytes from the environment into the coating.

It will be further appreciated that the nature of the coating is such as to offer no restriction as to the polar or non-polar nature of the solvent to be used.

The above example may be applied to production of sensors for distributed sensing. This would be achieved by pulsing the excitation source and monitoring the temporal evolution of the resulting emission signal. The temporal information can be used to deduce the location on the fibre where the signal originates while the intensity of the signal is a measure of the parameter.

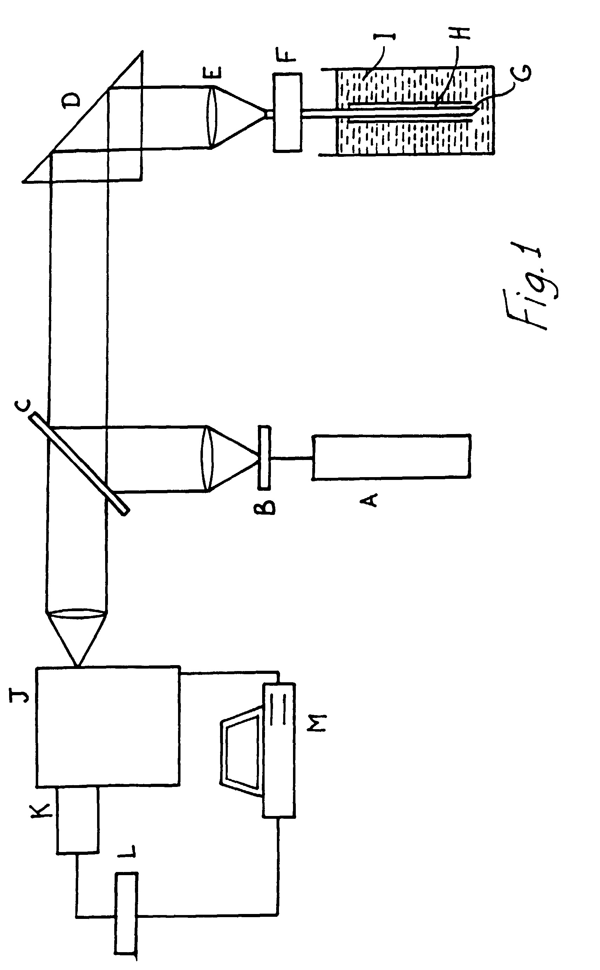

Referring now to Fig. 1 there is shown an optical arrangement for measuring the pH of an aqueous solution. An Argon-ion laser A provides a light beam of wavelength 488nm which is passed through a beam expander B. The expanded beam is passed through a dichroic filter C which has the property of reflecting light of 488nm wavelength and transmitting light of 500 to 700nm wavelength. The 488nm laser light is coupled into the coated optical fibre waveguide G in solution I by using a prism D and microscope objective E mounted on an X,Y,Z micropositioner F.

The entrapped fluorescein dye in the fibre coating H is excited by the evanescent field arising from the wave-guided laser light in the fibre G. A fraction of the resulting fluorescence, which has a maximum intensity around 530nm, is coupled back into the fibre G and some of this signal propagates back through the dichroic filter C and into a monochromator J. The fluorescence is detected by a photomultiplier tube K, the signal from which is digitised by an analogue-to-digital converter L and recorded in a microcomputer M.

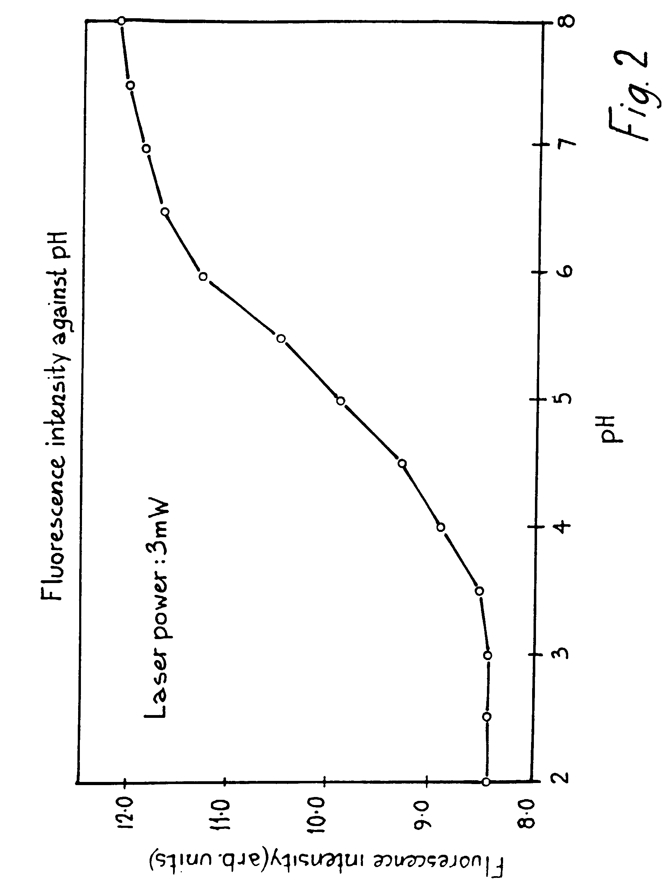

Fig. 2 is a plot of signals obtained, for a fixed laser power input of 3mW, by varying the pH of the solution I in Fig. 1.

These values provide a quantitative measure of analyte concentration in the environment, in this example the pH of an aqueous solution when it lies between pH 3.5 and pH 6.5. The response time of the sensor to a rapid change in pH is approximately 5 seconds.

It will be appreciated that while the specific embodiment described above refers to a particular substrate and a particular coating, the invention may be applied to any suitable substrates and coatings.

While the substrates are preferably silica glass, they may be of other materials including other inorganic glass materials including other oxide glasses such as titania, mixed silica-titania glasses, and non-oxide glasses such fluoride glasses. They may also be polymeric in nature.

Similarly, the precursor materials may include any suitable organo-metallic material which is compatible with the substrate to be coated.

These and many other changes and modifications will be readily apparent and accordingly the invention is not limited to the embodiments hereinbefore described which may be varied in detail.

## Claims

1. A waveguide sensor (G) for chemical detection including a light transmitting substrate and a coating on the substrate,
characterised in that
the coating (H) comprises a porous material derived from an organo-metallic species which is compatible with and is bonded to the substrate and which forms a cage-like porous molecular structure in which molecules of environmentally-sensitive dye are physically entrapped, the optical response providing an optical sensor of the local chemical environment.

2. A waveguide sensor as claimed in claim 1, characterised in that the coating is of a glass material.

3. A waveguide sensor as claimed in any preceding claim characterised in that the substrate is of a glass material.

4. A waveguide sensor as claimed in any preceding claim characterised in that the coating comprises a number of layers, one on top of another.

5. A waveguide sensor as claimed in any preceding claim characterised in that the coating is provided along at least part of the length of the waveguide to utilise the evanescent field of light transmitted in the waveguide.

6. A waveguide sensor as claimed in any preceding claim characterised in that the substrate comprises a fibre.

7. A waveguide sensor as claimed in any preceding claim characterised in that the dye is a fluorescent dye.

8. A waveguide sensor as claimed in claim 7 further comprising a light source for generation of light in the range of 400nm to 500nm wavelength.

9. A method for producing a waveguide sensor as claimed in any preceding claim characterised in that the method comprises the steps of:-
mixing precursor materials including an organo-metallic material and a dye to form a precursor solution;
curing the precursor solution;
at least partially coating a waveguide substrate with the cured precursor solution; and
curing the at least partially coated waveguide substrate to form a hard porous coating.

10. A method as claimed in claim 9 including the step of pretreating the waveguide substrate prior to coating.

11. A method as claimed in claims 9 or 10 characterised in that the substrate is of an inorganic glass material.

12. A method as claimed in any of claims 9 to 11 characterised in that the precursor materials include water and the molar ratio of water to organometallic species is less than 3:1.

13. A method as claimed in any of claims 11 or 12 characterised in that the substrate is of silica glass and the organometallic species comprises an organosilicon species.

14. A method as claimed in any of claims 9 to 13 characterised in that the precursor solution has a pH less than 3.0.

15. A method as claimed in any of claims 9 to 14 characterised in that the precursor solution is cured for between 12 and 24 hours at a temperature of between 65 and 85°.

16. A method as claimed in any of claims 9 to 15 characterised in that the coating is cured for between 18 and 30 hours at a temperature of between 65 and 75°C.

17. A method as claimed in any of claims 9 to 16 characterised in that the waveguide substrate is an oxide glass and is pretreated by etching off any covering present on the substrate and by hydroxylating the surface of the substrate.

18. A method as claimed in any of claims 9 to 17 characterised in that the substrate is a fibre which is coated by dipping the fibre into the cured precursor solution and withdrawing the fibre from the precursor solution at a desired rate to form a desired thickness of coating on the fibre.

19. A method as claimed in any of claims 9 to 18 wherein the dye is a fluorescent dye.

20. A method as claimed in claim 19, wherein the dye is a sodium salt of fluorescein.

## Patentansprüche

1. Ein Wellenleitersensor (G) fur Chemikaliennachweis einschließlich eines lichtübertragenden Substrates und einer Beschichtung auf dem Substrat, dadurch gekennzeichnet, daß die Beschichtung (H) ein poröses Material umfaßt, das von einer metallhaltigen organischen Gattung stammt, die an das Substrat geklebt und mit diesem kompatibel ist, und das eine käfigartige poröse, molekulare Struktur formt, in der Moleküle eines umweltempfindlichen Farbstoffs physikalisch eingeschlossen werden, wobei die optische Reaktion einen optischen Sensor der lokalen chemischen Umgebung liefert.

2. Ein Wellenleitersensor nach Anspruch 1, dadurch gekennzeichnet, daß die Beschichtung aus einem Glasmaterial beseht.

3. Ein Wellenleitersensor nach einem oder mehreren der vorangehenden Ansprüche, dadurch gekennzeichnet, daß das Substrat aus einem Glasmaterial besteht.

4. Ein Wellenleitersensor nach einem oder mehreren der vorangehenden Ansprüche, dadurch gekennzeichnet, daß die Beschichtung eine Anzahl von Schichten, eine über der anderen, enthält.

5. Ein Wellenleitersensor nach einem oder mehreren der vorangehenden Ansprüche, dadurch gekennzeichnet, daß die Beschichtung mindestens entlang einem Teil der Länge des Wellenleiters bereitgestellt ist, um das abklingende, im Wellenleiter übertragene, Lichtfeld zu nutzen.

6. Ein Wellenleitersensor nach einem oder mehreren der vorangehenden Ansprüche, dadurch gekennzeichnet, daß das Substrat eine Faser enthält.

7. Ein Wellenleitersensor nach einem oder mehreren der vorangehendem Ansprüche, dadurch gekennzeichnet, daß der Farbstoff ein fluoreszierender Farbstoff ist.

8. Ein Wellenleiter nach Anspruch 7, der außerdem eine Lichtquelle zur Erzeugung von Licht im Wellenlängenbereich 400 nm bis 500 nm umfaßt.

9. Ein Verfahren für die Herstellung eines Wellenleitersensors nach einem oder mehreren der vorangehenden Ansprüche, dadurch gekennzeichnet, daß das Verfahren folgende Schritte umfaßt:
Mischen von Vorstufensubstanzen einschließlich einer metallhaltigen organischen Substanz und eines Farbstoffs, um eine Vorstufenlösung zu bilden.
Altern der Vorstufenlösung;
mindestens teilweises Beschichten eines Wellenleitersubstrats mit der gealterten Vorstufenlösung; und
Altern des mindestens teilweise beschichteten Wellenleitersubstrats, um eine harte, poröse Beschichtung zu formen.

10. Ein Verfahren nach Anspruch 9, einschließlich des Schrittes der Vorbehandlung des Wellenleitersubstrats vor dem Beschichten.

11. Ein Verfähren nach Anspruch 9 oder 10, dadurch gekennzeichnet, daß das Substrat aus einem anorganischen Glasmaterials beseht.

12. Ein Verfahren nach einem oder mehreren der Ansprüche 9 bis 11, dadurch gekennzeichnet, daß die Vorstufensubstanzen Wasser einbeziehen und das Molverhältnis von Wasser zu metallhaltigen organischen Gattungen weniger als 3:1 beträgt.

13. Ein Verfahren nach einem oder mehreren der Ansprüche 11 oder 12, dadurch gekennzeichnet, daß das Substrat aus Kieselglas besteht und die metallhaltige organische Gattung eine siliciumhaltige organische Gattung umfaßt.

14. Ein Verfahren nach einem oder mehreren der Ansprüche 9 bis 13, dadurch gekennzeichnet, daß die Vorstufenlösung einen pH-Wert von weniger als 3,0 hat.

15. Ein Verfahren nach einem oder mehreren der Ansprüche 9 bis 14, dadurch gekennzeichnet, daß man die Vorstufenlösung für zwischen 12 und 24 Stunden bei einer Temperatur von zwischen 65 und 85° altern läßt.

16. Ein Verfahren nach einem oder mehreren der Ansprüche 9 bis 15, dadurch gekennzeichnet, daß man die Beschichtung für zwischen 18 und 30 Stunden bei einer Temperatur von zwischen 65 und 75 °C altern läßt.

17. Ein Verfahren nach einem oder mehreren der Ansprüche 9 bis 16, dadurch gekennzeichnet, daß das Wellenleitersubstrat ein Oxidglas ist und vorbehandelt wird, indem jeglicher auf dem Substrat vorhandener Überzug abgeätzt wird und indem man die Substratoberfläche hydroxyliert.

18. Ein Verfahren nach einem oder mehreren der Ansprüche 9 bis 17, dadurch gekennzeichnet, daß das Substrat eine Faser ist, die beschichtet wird, indem man die Faser in die gealterte Vorstufenlösung taucht und die Faser mit einer erforderlichen Geschwindigkeit aus der Vorstufenlösung herauszieht, um eine gewünschte Beschichtungsstärke auf der Faser zu formen.

19. Ein Verfahren nach einem oder mehreren der Ansprüche 9 bis 18, wobei der Farbstoff ein fluoreszierender Farbstoff ist.

20. Ein Verfahren nach Anspruch 19, wobei der Farbstoff ein Natriumsalz von Fluorescein ist.

## Revendications

1. Capteur en guide d'ondes (G) pour une détection chimique comprenant un substrat transmettant la lumière et un revêtement sur le substrat,
caractérisé en ce que
le revêtement (H) comprend un matériau poreux dérivé d'une espèce organométallique qui est compatible avec le substrat et lié à celui-ci, et qui forme une structure moléculaire poreuse semblable à une cage dans laquelle les molécules d'un colorant sensible à l'environnement sont physiquement piégées, la réponse optique formant un capteur optique de l'environnement chimique local.

2. Capteur en guide d'ondes selon la revendication 1, caractérisé en ce que le revêtement se compose d'un matériau en verre.

3. Capteur en guide d'ondes selon l'une quelconque des revendications précédentes, caractérisé en ce que le substrat se compose d'un matériau en verre.

4. Capteur en guide d'ondes selon l'une quelconque des revendications précédentes, caractérisé en ce que le revêtement comprend un certain nombre de couches, l'une sur l'autre.

5. Capteur en guide d'ondes selon l'une quelconque des revendications précédentes, caractérisé en ce que le revêtement est prévu le long d'au moins une partie de la longueur du guide d'ondes afin d'utiliser le champ évanescent de lumière transmise dans le guide d'ondes.

6. Capteur en guide d'ondes selon l'une quelconque des revendications précédentes, caractérisé en ce que le substrat comprend une fibre.

7. Capteur en guide d'ondes selon l'une quelconque des revendications précédentes, caractérisé en ce que le colorant est un colorant fluorescent.

8. Capteur en guide d'ondes selon la revendication 7, comprenant en outre une source lumineuse destinée à générer une lumière dans la plage de longueur d'onde de 400 nm à 500 nm.

9. Procédé de fabrication d'un capteur en guide d'ondes selon l'une quelconque des revendications précédentes, caractérisé en ce que le procédé comprend les étapes consistant à :
mélanger des matériaux précurseurs comprenant un matériau organométallique et un colorant afin de former une solution de précurseur ;
cuire la solution de précurseur ;
revêtir au moins partiellement un substrat de guide d'ondes avec la solution de précurseur cuite ; et
cuire ledit substrat de guide d'ondes au moins partiellement revêtu afin de former un revêtement poreux dur.

10. Procédé selon la revendication 9, comprenant l'étape consistant à soumettre le substrat de guide d'ondes à un pré-traitement avant revêtement.

11. Procédé selon les revendications 9 ou 10, caractérisé en ce que le substrat se compose d'un matériau en verre inorganique.

12. Procédé selon l'une quelconque des revendications 9 à 11, caractérisé en ce que les matériaux précurseurs comprennent l'eau et le rapport en moles de l'eau sur les espèces organométalliques est inférieur à 3:1.

13. Procédé selon l'une quelconque des revendications 11 ou 12, caractérisé en ce que le substrat est en verre de silice et l'espèce organométallique comprend une espèce organo-silicium.

14. Procédé selon l'une quelconque des revendications 9 à 13, caractérisé en ce que la solution de précurseur a un pH inférieur à 3,0.

15. Procédé selon l'une quelconque des revendications 9 à 14, caractérisé en ce que la solution de précurseur est cuite pendant 12 à 24 heures à une température comprise entre 65 et 85°C.

16. Procédé selon l'une quelconque des revendications 9 à 15, caractérisé en ce que le revêtement est cuit pendant 18 à 30 heures à une température comprise entre 65 et 75°C.

17. Procédé selon l'une quelconque des revendications 9 à 16, caractérisé en ce que le substrat de guide d'ondes est un verre d'oxyde et est soumis à un pré-traitement consistant à enlever par attaque chimique tout recouvrement présent sur le substrat et à hydroxyler la surface du substrat.

18. Procédé selon l'une quelconque des revendications 9 à 17, caractérisé en ce que le substrat est une fibre qui est revêtue en plongeant la fibre dans la solution de précurseur cuite et en retirant la fibre de la solution de précurseur cuite à une vitesse souhaitée pour former une épaisseur souhaitée de revêtement sur la fibre.

19. Procédé selon l'une quelconque des revendications 9 à 18, dans lequel le colorant est un colorant fluorescent.

20. Procédé selon la revendication 19, dans lequel le colorant est un sel de sodium de fluorescéine.
